# EUROPÄISCHE PATENTSCHRIFT

(11) **EP 0 873 364 B1**
(45) Veröffentlichungstag und Bekanntmachung des Hinweises auf die Patenterteilung: **06.02.2002**
(21) Anmeldenummer: 97950091.5
(22) Anmeldetag: 04.11.1997
(51) Int. Cl.: C08B 1/00, C08B 1/02, C08B 1/06, C08B 1/08

(54) **VERFAHREN ZUR HERSTELLUNG VON CELLULOSEDERIVATEN**
METHOD FOR PRODUCING CELLULOSE DERIVATIVES
PROCEDE DE PRODUCTION DE DERIVES DE CELLULOSE

(30) Priorität: 08.11.1996 DE 19646213
(43) Veröffentlichungstag der Anmeldung: 28.10.1998
(73) Patentinhaber: Rhodia Acetow GmbH, 79108 Freiburg (DE)
(72) Erfinder: KARSTENS, Ties, D-79268 Bötzingen (DE); STEIN, Armin, D-79341 Kenzingen (DE)
(74) Vertreter: Hagemann, Heinrich, Dr.rer.nat., Dipl.-Chem.
(86) Internationale Anmeldenummer: EP9706089
(87) Internationale Veröffentlichungsnummer: WO9821246

(56) Entgegenhaltungen:
- EP-A- 0 108 991
- DE-A- 4 329 937
- SCHLEICHER D. ET AL.: "Zum Einfluss einer Aktivierung von Cellulose mit Ammoniak auf deren anschliessende Alkalisierung und Xanthogenierung" FASERFORSCHUNG UND TEXTILTECHNIK, Bd. 24, Nr. 9, 1973, DE, Seiten 371-376, XP002058612 in der Anmeldung erwähnt

## Beschreibung

Die Erfindung betrifft ein Verfahren zur Herstellung von Cellulosederivaten, bei dem Cellulose mit einer Alkalilösung imprägniert, die imprägnierte Cellulose wahlweise abgepreßt und die Cellulose einer Substitutions- oder Additionsreaktion unterworfen wird, wobei ein Cellulosederivat mit einem Substitutionsgrad DS erhalten wird.

Die Mehrzahl der Substitutionsreaktionen der Cellulose verläuft über Alkalicellulose als Zwischenstufe. Dabei unterscheidet man zwischen Reaktionen mit Alkaliverbrauch, wie z.B. der Herstellung von Methyl- oder Ethylcellulose durch Umsetzung mit den entsprechenden Alkylhalogeniden, der Herstellung von Carboxymethylcellulose durch Umsetzung mit Chloressigsäure oder deren Natriumsalz, oder der Herstellung von Cellulosexanthogenat durch Umsetzung mit Schwefelkohlenstoff, sowie Reaktionen ohne Alkaliverbrauch, wie z.B. der Herstellung von Hydroxyethyl- und Hydroxypropylcellulose durch Umsetzung der Alkalicellulose mit Ethylenoxid oder Propylenoxid. oder der Herstellung von Cyanoethylcellulose durch Umsetzung mit Acrylnitril.

Die EP-A-0108991 betrifft ein Verfahren zur Herstellung von wasserlöslichen Celluloseethern, bei dem die Cellulose zunächst in flüssigem Ammoniak vorgequellt und anschließend nach Zugabe eines Akalisierungsmittels verethert wird.

Gereinigte Cellulose wird durch Behandeln mit Alkali, in der Technik fast ausschließlich Natronlauge, in Alkalicellulose überführt (Alkalisierung). Es wird angenommen, daß in der Alkalicellulose ein Teil der Cellulose in Form eines hydratisierten Alkoholats Cell-O⁻ Na⁻ ... H⁻OH⁻ vorliegt. Die Natronlauge hat außerdem die Aufgabe, die Cellulose zu quellen und diese für die Reaktonspartner der nachfolgenden Derivatisierungsreaktionen zugänglich zu machen. Im amorphen Teil der Cellulose bildet sich das Cellulosealkoholat relativ leicht. Damit dies auch für den kristallinen Bereich der Cellulose eintritt. sind hinsichtlich der Temperatur und der Konzentration der Natronlauge bestimmte Bedingungen einzuhalten. Nur wenn die Konzentration an Natronlauge hinreichend hoch ist. bildet sich das Gitter der Natroncellulose 1, das beim Auswaschen (Regenerieren) in das Gitter der Cellulose II (Regeneratcellulose) übergeht. Bei der Umwandlung von Cellulose I in Natroncellulose I werden die Abstände der 101-Gitterebenen von etwa 7 auf etwa 12 Á aufgeweitet. Dieser Übergang läßt sich auch durch Verfolgen der scheinbaren Dichte sichtbar machen. Cellulosematerial mit hoher Kristallinität zeigt einen hohen Widerstand gegen die Alkalisierung. In der Praxis liefert nur ein enges NaOH-Konzentrationsgebiet technisch brauchbare Alkalicellulosen. Bei den eingeführten technischen Verfahren wird der vorzerkleinerte Zellstoff in 18-20%ige wäßrige Natronlauge getaucht (Flottenverhältnis mindestens 10:1). Ein Großteil der Natronlauge wird anschließend durch Abpressen wieder entfernt. Allerdings erreicht man dabei üblicherweise eine Zusammensetzung von etwa 34 Masse-% Zellstoff und 66 Masse-% wäßriger NaOH (steeping and pressing) bzw. von nur 25 Masse-% Zellstoff und 75 Masse-% NaOH (slurry and roller press).

Ein Großteil der im Zellstoff verbliebenen Natronlauge wird jedoch für die nachfolgenden Derivatisierungsreaktionen nicht gebraucht, sondern haftet als loses Assoziat am Zellstoff und wird beim Abpressen nicht entfernt. Ein Auswaschen mit Wasser scheidet aus, weil hierdurch die Natronlauge verdünnt und die Ausgangsmodifikation zurückgebildet würde.

Der für die Herstellung der Cellulosederivate überschüssige Anteil an Natronlauge führt bei den Derivatisierungsreaktionen zu einem hohen Reagentienverbrauch, der meist mit einer Salzbildung verbunden ist, und zur Bildung von Nebenprodukten. Bei der Xanthogenierung reagiert die überschüssige Natronlauge mit Schwefelkohlenstoff beispielsweise zum unerwünschten Trithiocarbonat. Sowohl die Salze als auch die Nebenprodukte müssen zum Teil unter erheblichem Aufwand abgetrennt und entsorgt bzw. aufgearbeitet werden. Bei den Celluloseethern betragen die Kosten hierfür bereits 20% der Produktionskosten. Bei der Viskoseherstellung über das Cellulosexanthogenat sind aufgrund der hohen behördlichen Auflagen beim Umweltschutz ebenfalls erhebliche Aufwendungen für die Reinigung des Abwassers notwendig.

Trotz des hohen Überschusses an Natronlauge bei dem bekannten Verfahren wird festgestellt, daß bei den über die Alkalicellulose als Zwischenstufe hergestellten Derivaten inhomogene Substituentenverteilungen vorliegen. Diese geben sich bei Celluloseethern beispielsweise durch zu geringe Löslichkeit, zu starke Trübung und eine zu niedrige Flockungstemperatur zu erkennen.

Es wurde bereits berichtet, daß bei aktiviertem Zellstoff im Vergleich zum unbehandelten Zellstoff die Gitterumwandlung von Cellulose I zu Natroncellulose I bereits bei erheblich geringerer NaOH-Konzentration stattfindet. Hierzu sei auf Schleicher, Daniels und Philipp, in Faserforschung und Textiltechnik 24 (1973) S. 371 bis 376 und WO 96/30411 verwiesen. Diese Literaturstellen legen jedoch nicht nahe, daß im Hinblick auf nachfolgende Derivatisierungsreaktionen die absolute Alkalimenge, d.h. das molare NaOH/AHG-Verhältnis (AHG = Anhydroglucose-Einheit), eine Rolle spielen könnte.

Der Erfindung lag daher die Aufgabe zugrunde, ein eingangs erwähntes Verfahren. bereitzustellen, das die angesprochenen Nachteile des Standes der Technik nicht aufweist. Der Erfindung lag insbesondere die Aufgabe zugrunde, ein Verfahren der eingangs geschilderten Art bereitzustellen, bei dem zum Beginn der Derivatisierungsreaktion lediglich ein geringer Überschuß bzw. eine stöchiometrische oder sogar substöchiometrische Menge an Alkali vorliegt.

Erfindungsgemäß wird diese Aufgabe durch ein Verfahren zur Herstellung von Cellulosederivaten gelöst, bei dem a) Cellulose mit einer Alkalilösung imprägniert wird, b) die imprägnierte Cellulose wahlweise abgepreßt wird und c) die Cellulose einer Substitutions- oder Additionsreaktion unterworfen wird, wobei ein Cellulosederivat mit einem Substitutionsgrad DS erhalten wird, das dadurch gekennzeichnet ist. daß die eingesetzte Cellulose eine ammoniakaktivierte Cellulose ist , die durch ein Verfahren erhalten wird, bei dem Cellulose mit flüssigem Ammoniak bei einem gegenüber Atmosphärendruck erhöhten Ausgangsdruck und bei einer Temperatur von mindestens 25°C in Kontakt gebracht wird, wobei die Menge des flüssigen Ammoniaks zumindest zur Benetzung der Oberfläche der Cellulose ausreicht, und das dem System Cellulose/flüssiges Ammoniak zur Verfügung stehende Volumen unter Senken des Drucks um mindestens 5 bar explosionsartig vergrößert wird, und das molare Verhältnis von Alkali zu AHG in der Cellulose zu Beginn von Schritt c) das 2-fache vom DS nicht überschreitet.

Unter "Alkalilösung" sollen wäßrige oder alkoholische Lösungen von Alkalimetall- oder Erdalkalimetallhydroxiden, -oxiden und/oder -carbonaten verstanden werden. Vorzugsweise ist die Alkalilösung wäßrige oder alkoholische Natronlauge oder Kalilauge. Die alkoholischen Lösungen enthalten vorzugsweise Methanol, Ethanlol und/oder Isopropanol als Lösungsmittel.

Bei erfinungsgemäßen Verfahren sind bereits niedrig konzentrierte Alkalilösungen wirksam; denn für die erfolgreiche weitere Umsetzung ist eine Umwandlung durch Alkali in das Cellulose II-Gitter nicht nötig, weil durch die Aktivierung bereits eine in ihrem Gitter aufgeweitete neue Cellulose-Modifikation entstanden ist. Im allgemeinen sind Konzentrationen von etwa 12 Gew.-% oder weniger geeignet. Vorzugsweise weist die Alkalilösung eine Konzentration von weniger als etwa 10, insbesondere von weniger als etwa 8, Gew.-% auf. Insbesondere sind Konzentrationen von etwa 1 bis 6 Gew.-% geeignet.

Das molare Alkali/AHG-Verhältnis überschreitet zu Beginn von Schritt c) das 2-fache, vorzugsweise das 1,5-fach, insbesondere das 1,1-fache des angestrebten Substitutionsgrades nicht. Insbesondere kann bei alkaliverbrauchenden Reaktionen sogar ein stöchiometrisches Alkali/AHG-Verhältnis eingestellt werden. Unter stöchiometrisch soll hier ein molares Alkali/AHG-Verhältnis verstanden werden, das nahe beim gewünschten Substitutionsgrad des Endproduktes liegt.

Bei durch Alkali lediglich katalysierten Reaktionen kann man sogar ein bezüglich des anzustrebenden Substitutionsgrades substöchiometrisches Verhältnis einstellen.

Die Substitutions- oder Additionsreaktion kann vorzugsweise durch Umsetzung mit Schwefelkohlenstoff, acylgruppenübertragenden Reagenzien, wie Carbonsäureanhydriden, z.B. Essigsäureanhydrid, Isopropenylacetat. Dicarbonsäureanhydriden, z.B. Phthalsäureanhydrid, Bernsteinsäureanhydrid, Glutarsäureanhydrid, Maleinsäureanhydrid, Carbonsäurechloriden, z.B. Propionsäurechlorid, Stearylsäurechlorid, Carbonsäuren, z.B. Ameisensäure; alkylgruppenübertragenden Reagenzien, wie Methylchlorid, Ethylchlorid, Benzylchlorid; Alkenoxiden, wie Ethylenoxid, Propylenoxid, Styrenoxid; α-Halogencarbonsäuren, wie Chloressigsäure, bzw. deren Salzen, α,β-ungesättigten Carbonylverbindungen oder Acrylnitril bewirkt werden. Hierzu ist bisweilen ein Katalysator, wie z.B. Benzyltrimethylammoniumchlorid, Tetrabutylammoniumchlorid, -hydroxid, hydrogensulfat, Ti(OR)₄, Imidazol, N-Methylimidazol, Li-, Na- und Mg-Acetat vorteilhaft. Die Umsetzung kann in einem wäßrigen Medium oder einem organischen Lösungsmittel, wie NMP. DMAc, DMSO, DMF, Dioxan, THF, iso-Propanol, tert.-Butanol oder Mischungen daraus, erfolgen.

Beim erfindungsgemäßen Verfahren muß ammoniakaktivierte Cellulose eingesetzt werden. "Ammoniakaktivierung" bedeutet, daß die Cellulose unter erhöhtem Druck mit flüssigem Ammoniak behandelt und das System anschließend entspannt worden ist. Native Cellulose ist ein Polysaccharid, das aufgrund der Ausbildung intermolekularer Wasserstoffbrückenbindungen kristalline Bereiche aufweist. Das Ammoniakmolekül ist aufgrund seiner nukleophilen Eigenschaften in der Lage, sich zwischen die cellulosischen OH-Gruppen zu schieben. Hierdurch wird eine Quellung und Gitteraufweitung erreicht. Bei der anschließenden Entspannung verdampft der Ammoniak größtenteils. Dabei nimmt der Quellgrad bzw. die Gitteraufweitung wieder ab und nimmt einen Wert zwischen der vollen Quellung und der unbehandelten Cellulose ein. Die bekannten Verfahren zur Ammoniakaktivierung von Cellulose lassen sich in die einfache Ammoniakentspannung und die sogenannte Ammoniakexplosion unterteilen. Bei beiden wird die Cellulose in einem Druckgefäß mit flüssigem Ammoniak beaufschlagt. Bei der Technologie der Ammoniakentspannung wird durch Öffnen eines Ventils mit kleiner Bohrung am Druckreaktor dafür gesorgt, daß sich unter Druckabbau ein Teil des flüssigen Ammoniaks gasförmig aus dem Druckbehälter entweicht. Die im Druckreaktor verbleibende Cellulose gibt dabei nicht allen flüssigen Ammoniak ab. sondern es verbleibt ein Gehalt an ca. 50% des eingesetzten Ammoniaks in der Celluose. Ein derartiges Verfahren ist z.B. in der DE 43 29 937 C1 offenbart. Bei der Technologie der Ammoniakexplosion wird aus dem System Cellulose/flüssiges Ammoniak zur Verfügung stehende Volumen unter Senken des Drucks explosionsartig vergrößert. Zur praktischen Ausführung kann hierzu am Druckreaktor ein Ventil mit großer Bohrung geöffnet werden, wobei die Cellulose und der Ammoniak schlagartig aus dem Druckbehälter in einen Explosions- oder Auffangraum herausgeschleudert werden. Der flüssige Ammoniak verdampft hierbei im wesentlichen aus der Cellulose; es verbleibt lediglich ein geringer Restammoniakgehalt, dessen Höhe von den Verfahrensparametern abhängt.

Die aktivierte Cellulose weist für die Zwecke der Erfindung vorzugsweise einen LODP-Wert ("Limiting Degree of Polymerization" oder "Leveling-off-Degree of Polymerization" (LOPD-Wert); s. Hans A. Krässig "Polymer Monographs", Vol. 11, Gordon and Breach Science Publishers, insbesondere S. 191 ff.) von zwischen etwa 100 und 160 und insbesondere zwischen etwa 120 bis 145 auf. Vorzugsweise liegt die aktivierte Cellulose als Flaum vor und zeichnet sich durch einen niedrigen Dichtegrad von weniger als etwa 0.2 g/cm³, insbesondere weniger als etwa 0,1 g/cm³ aus. Aktivierte Cellulose weist eine aufgeweitete Raumnetzstruktur sowie eine hohe spezifische Oberfläche mit hoher Zugänglichkeit auf.

Vorzugsweise wird die aktivierte Cellulose durch ein Verfahren erhalten, bei dem Cellulose mit flüssigem Ammoniak bei einem gegenüber Atmosphärendruck erhöhten Ausgangsdruck und bei einer Temperatur von mindestens etwa 25°C in Kontakt gebracht wird, wobei die Menge des flüssigen Ammoniaks zumindest zur Benetzung der Obertläche der Cellulose ausreicht und das dem System Cellulose/flüssiges Ammoniak zur Verfügung stehende Volumen unter Senken des Drucks um mindestens 5 bar explosionsartig vergrößert wird.

Wenn hier von "explosionsartig" gesprochen wird, dann ist dieser Begriff eng zu sehen. Vorzugsweise erfolgt die explosionsartige Volumenvergrößerung innerhalb einer Zeit von weniger als einer Sekunde, insbesondere weniger als 0,5 Sekunden. Bei kontinuierlicher Verfahrensführung wird bei der Betrachtung auf eine inkrementelle Menge Cellulose/flüssiges Ammoniak abgestellt. Die Cellulose wird vorzugsweise in einer Druckeinrichtung mit dem flüssigen Ammoniak in Kontakt gebracht, und das System Cellulose/flüssiges Ammoniak durch Überführen in einen Explosionsraum mit gegenüber der Druckeinrichtung größerem Volumen entspannt. Vorzugsweise liegt der Ausgangsdruck zwischen etwa 5 und 46 bar, insbesondere zwischen etwa 25 und 30 bar. Der Mindestdruckabfall von 5 bar ist kritisch. Wird er unterschritten, dann wird eine hinreichende Aktivierung der Cellulose nicht erreicht. Der obere Grenzwert von etwa 46 bar führt bei seiner Überschreitung nicht zu weitergehenden Vorteilen. Seine Einstellung bedingt einen relativ großen apparativen Aufwand, so daß eine weitergehende Anhebung unter praktischen Erwägungen nicht sinnvoll ist. Mit dem angegebenen Druckrahmen korreliert die Temperatur von etwa 25 bis 85°C bzw. 55 bis 65°C. Vorzugsweise wird der Ausgangsdruck in dem System Cellulose/flüssiges Ammoniak explosionsartig um mindestens etwa 10 bar und insbesondere etwa 30 bar gesenkt. Vorzugsweise erfolgt die Explosion in einen Explosionsraum, der unter Vakuum gehalten wird. Dabei muß der Explosionsraum hinreichend groß gewählt werden, um die gewünschte Auffaserung bzw. die Defibrillierung in das große Volumen erreichen zu lassen. Vorzugsweise wird das Ammoniak aus dem Explosionsraum abgezogen, erneut kondensiert und in das Verfahren zurückgeführt.

In die Druckeinrichtung muß eine ausreichende Menge Ammoniak eingepreßt werden, so daß unter den erfindungsgemäß erforderlichen Druck- bzw. Temperaturbedingungen flüssiger Ammoniak vorhanden ist und zumindest die Oberfläche der Cellulose benetzt ist. Vorzugsweise entfallen auf 1 Masse-Teil Cellulose mindestens etwa 1. Masse-Teil, insbesondere etwa 5 bis 10 Masse-Teile, flüssiges Ammoniak. Durch die Einwirkung des Ammoniaks erfolgt eine zumindest partielle Quellung der Cellulose.

Das bevorzugte Aktivierungsverfahren kann diskontinuierlich oder kontinuierlich durchgeführt werden. Bei diskontinuierlicher Verfahrensführung weist die Apparatur im wesentlichen einen Druckbehälter, der mit dem zu behandelnden Gut gefüllt werden kann, und einen über ein Ventil daran angeschlossenen Auffang- bzw. Expansionsbehälter auf. Es gilt hierbei zu beachten, daß das Ventil im geöffneten Zustand eine große lichte Öffnung aufweist, damit sich beim Explosionsvorgang das Cellulosematerial nicht staut und nicht lediglich Ammoniak entweicht. Der Expansionsbehälter weist gegenüber dem Druckbehälter ein vielfaches Volumen auf, beispielsweise beträgt das Volumen des Druckbehälters 1 l und das Volumen des Expansionsbehälters 30 l. Der Druckbehälter ist mit einer Zufuhrleitung für Ammoniak, gegebenenfalls unter Zwischenschaltung einer druckerhöhenden Vorrichtung, verbunden. Zur weiteren Druckerhöhung kann außerdem eine Zufuhrleitung für Inertgase, z.B. Stickstoff, vorgesehen sein.

In kontinuierlicher Weise könnte das Verfahren unter Heranziehen eines rohr- oder zylinderförmigen, druckfesten Reaktors durchgeführt werden, bei dem das Inkontaktbringen von Cellulose und flüssigem Ammoniak im Zylinder des Reaktors stattfindet und das imprägnierte Material mit Hilfe einer Förderschnecke als Pfropfen durch den Reaktor transportiert wird und intermittierend durch ein Ventil oder ein geeignetes System von Druckschleusen in einen Auffangraum ausgetragen wird. Geeignete Komponenten, die der Fachmann ohne weiteres zur Durchführung des erfindungsgemäßen Verfahrens adaptieren kann, sind in der EP-A-329 173 bzw. der US-4 211 163 beschrieben.

Die Cellulose sollte einen geringen Feuchtegehalt, vorzugsweise weniger als 9 Masse-%, insbesondere weniger als 7 Masse-%, aufweisen. Sie ist vorzugsweise chemisch rein, d.h. weist vorzugsweise weniger als etwa 12, insbesondere weniger als etwa 8 Masse-%, Fremdstoffe auf. Die Kontaktzeit zwischen dem flüssigen Ammoniak und dem Zellstoff ist nicht kritisch. Als sinnvolle Mindestkontaktzeit kann etwa 4 Minuten angegeben werden, in der Regel beträgt sie etwa 8 Minuten.

Eine durch Ammoniakexplosion hergestellte aktivierte Cellulose weist ein besonderes Röntgenbeugungsspektrum mit Peaks bei folgenden Beugungswinkeln 2 θ und mit den relativen Intensitäten:
Peak 11,25 ± 1 der relativen Intensität von etwa 15 bis 25.
Peak 17 ± 1 der relativen Intensität von etwa 25 bis 40 und
Peak 20,5 ± 1 der relativen Intensität 100 (Bezugsgröße), auf.

Diese Cellulosemodifkation wird auch als Cellulose III* bezeichnet. Es wurde gefunden, daß bei der Behandlung dieser Cellulosemodifikation mit 4 bis 12 Gew.-%iger Natronlauge eine Mischung aus Cellulose II und amorpher Cellulose erhalten wird, wobei der Anteil an amorpher Cellulose mit der Konzentration der verwendeten Natronlauge steigt. Bei der klassischen Mercerisierung, d.h. der Behandlung von nativer Cellulose mit 18 bis 20 Gew.-%iger Natronlauge wird aus der Cellulose I zunächst Alkalicellulose und daraus Cellulose II, nie jedoch amorphe Cellulose, erhalten. Bei der Behandlung der Cellulose III* mit Natronlauge einer Konzentration von weniger als 4 Gew.-%, insbesondere von weniger als 2 Gew.-%, bildet sich vermutlich eine Additionsverbindung aus Cellulose III* und NaOH.

Die folgenden Erläuterungen werden mit besonderem Bezug auf die Ammoniakexplosion und wäßrige Natronlauge gegeben, sollen aber entsprechend für andere Aktivierungsverfahren, Alkalien und Lösungsmittel gelten.

Für die Behandlung mit wäßriger Natronlauge ist der Restammoniakgehalt des Zellstoffes nach der NH₃- Explosion nicht kritisch. Nach der NH₃-Explosion wird der ammoniakaktivierte Zellstoff in geeigneter Weise mit verdünnter Natronlauge in Kontakt gebracht. Dabei kann der Zellstoff in eine Lösung der Lauge in Wasser eingetragen oder mit der Lösung besprüht werden, oder die Lösung wird im Gegenstrom dem Zellstoff entgegengeführt. Alle technologischen Ausführungsformen des Inkontaktbringens eines Feststoffes mit einer flüssigen Komponente, die zu einer intensiven Durchmischung bzw. Durchdringung führen, sind hier denkbar und möglich.

Die hohe Zugänglichkeit des NH₃-explodierten Zellstoffes sowie seine hohe spezifische Oberfläche (niedriger Dichtegrad) gestatten die rasche Diffusion der NaOH-Lösung in das Innere der Cellulose, wobei es zu einer homogenen Verteilung der NaOH über die ganze Cellulose kommt. Der NH₃-explodierte Zellstoff wird durch die verdünnte NaOH-Lösung inkludiert.

Dabei verdrängen die NaOH-Moleküle unter Ausbildung der bekannten polaren Struktur mit den cellulosischen OH-Gruppen die noch vorhandenen NH₃-Moleküle, denn aufgrund der höheren Basizität der NaOH wird der Ammoniak aus dem Zellstoff vertrieben.

Damit ergibt sich die folgende "Aufgabenteilung": die Ammoniakexplosion bewirkt eine hohe Zugänglichkeit des Zellstoffes, und die NaOH bildet Dipole mit den cellulosischen OH-Gruppen.

Die Vorteile der Aufteilung von Aktivierung bzw. Erhöhung der Zugänglichkeit einerseits und Bildung der Alkalicellulose andererseits liegen auf der Hand. Die Aktivierung, vorzugsweise durch Ammoniakexplosion, stellt eine wesentliche Voraussetzung für die Herstellung der stöchiometrischen Alkalicellulose dar. Die Vorteile der Bildung einer stöchiometrischen Alkalicellulose und der daraus herstellbaren Cellulosederivate lassen wie folgt zusammenfassen:

Es gibt im Gegensatz zur klassischen Mercerisierung bzw. Alkalisierung weniger bzw. keine anhaftende, d.h. überflüssige Lauge. Damit kann gegebenenfalls auf den Prozeßschritt des Abpressens der Lauge verzichtet werden. Der Verbrauch an NaOH läßt sich somit drastisch (bis zu 75%) reduzieren. Damit stehen ein geringerer Verbrauch an Reagentien, erhöhte Ausbeute und geringere Salz- und Nebenproduktbildung in engem Zusammenhang.

Die Reaktionen nähern sich, obwohl noch heterogen durchgeführt, einem homogenen Verlauf an. Infolgedessen erhält man auch höhere Produktqualität und - performance bei den Endprodukten, was auf eine homogenere Substituentenverteilung zurückzuführen ist. Diese wiederum ist Folge einer homogenen Verteilung der Cellulose-Oxonium- NaOH-Komplexe.

Nachstehend sollen die Vorteile anhand der Herstellung von Viskose erläutert werden:

Der Zellstoff muß für die Ammoniakexplosion nur relativ grob vorzerkleinert (gerissen) werden. Durch die NH₃-Explosion wird der Zellstoff dann weitgehend aufgefasert, so daß eine weitere mechanische Zerkleinerung (shredding) entfallen kann, was eine beachtliche Energieeinsparung bedeutet. Bei Verwendung von Zellstoff mit einem Polymerisationsgrad nahe demjenigen, der für das Endprodukt erreicht werden sollte, ist auch die sogenannte Reife nicht erforderlich. Dies ist ein im Zuge der Viskoseherstellung relativ heikler Prozeßschritt, da hierbei die Gefahr des Austrocknens der Cellulosekrumen besteht, was unweigerlich inhomogene Reaktivitäten nach sich zieht.

Bei der Xanthogenatherstellung nach der erfindungsgemäßen technischen Lehre bringt man die beispielsweise ammoniakexplodierte Cellulose in 5-6%ige NaOH ein, wobei das Flottenverhältnis so gewählt wird, daß nach völliger Auflösung eine 8-9%ige Viskose resultiert. Dies entspricht der beim Verspinnen üblichen Cellulosexanthogenat-Konzentration. Die Bildung des Xanthogenats geht unter Rühren oder Scherung bei langsamem Zusatz von CS₂ vor sich, wobei im Laufe der Umsetzung immer größere Anteile der Cellulose gelöst werden. Die Verfolgung des Auflösungsvorganges mit geeigneten technischen Mitteln (optische Sensoren, Viskosität, Drehmoment etc.) erlaubt, nur soviel Schwefelkohlenstoff einzusetzen, wie nötig. Die Reaktion verläuft rascher als beim klassischen Prozeß. Damit ist mit vorhandenen Anlagen eine um bis zu 30% höhere Produktionskapazität erreichbar.

Alternativ könnte man die beispielsweise ammoniakexplodierte Cellulose mit nur 1-2%iger NaOH in Kontakt bringen, dann Schwefelkohlenstoff zugeben und parallel zur Zugabe des Schwefelkohlenstoffes oder nach abgeschlossener Schwefelkohlenstoffzugabe mit konzentrierter NaOH die Spinnkonzentration der Viskose einstellen.

In den folgenden Beispielen sind alle Prozentangaben Masse-%, soweit nicht anders angegeben.

### Beispiel 1: Herstellung von ammoniakexplodierter Cellulose

200 g handelsüblicher Chemiezellstoff (Cuoxam - DP 480) mit einem Gehalt an α-Cellulose von etwa 96% in Blattform (Wassergehalt etwa 8%) wurde in etwa 1,3 x 1,3 cm große Stücke zerschnitten und in einen Autoklaven von 1 1 mit einer Doppelwand zur Dampfbeheizung gegeben. Anschließend wurden 400 g flüssiges Ammoniak über ein Ventil in den Autoklav eingepreßt. Das Masse-Verhältnis von Ammoniak/Zellstoff betrug 2:1. Durch die Dampfbeheizung des Autoklaven wurde die Temperatur auf 60 °C angehoben. Hierbei stellte sich innerhalb des Autoklaven ein Druck von etwa 20 bar ein. Das Reaktionsgemisch wurde 60 s unter diesen Bedingungen gehalten. Anschließend wurde es durch Öffnung des Ventils (lichter Durchmesser 4 cm) schlagartig und gänzlich in einen Explosionsbehälter eines Volumens von 30 l entspannt. Es stellte sich optimale Defibrillierung ein. Der Ammoniakgehalt des im Explosionsraum anfallenden Erzeugnisses lag bei etwa 1 Gew. %, bezogen auf den defibriltierten Zellstoff.

### Beispiel 2: Herstellung von Benzylcellulose

Diese NH₃ -aktivierte Cellulose eines Restammoniakgehalts von 3 % wird in Natronlauge dispergiert (400 ml auf 10 g Cellulose). Diese Suspension wird 1 Stunde auf 20 - 25 °C gehalten. Die modifizierte Cellulose wird mit Ethanol gewaschen, nachdem vorher die wässrige Natronlauge abgesaugt wurde. Der Gehalt an verbleibender NaOH betrug 2,5% (bezogen auf Cellulose). Die gewaschene Cellulose wird in ein N-Methylpyrrolidon (NMP) gegeben, das 3,9% Benzyltrimethylammoniumchlorid enthält. Die Suspension wird bei 40 °C unter leichtes Vakuum gesetzt (20 mbar), um das Ethanol vollständig zu entfernen. Bei Normaldruck wird anschließend unter starkem Rühren eine Lösung von Benzylchlorid in NMP zugegeben, wobei das molare Verhältnis Benzylchlorid/AHG 2:1 betrug. Nach einer Reaktionsdauer von 1 Stunde bei 40 °C wird die erhaltene Benzylcellulose abfiltriert und mit Wasser gewaschen, bis ein pH-Wert von nahe 7 im Waschwasser erreicht ist. Die Benzylcellulose wird anschließend bei einer Temperatur von 80 °C bei einem Vakuum von 1 mm Hg getrocknet. Der Substitutionsgrad betrug laut Infrarotspektroskopie 0.15.

### Beispiel 3: Herstellung von Benzoylcellulose

Eine Masse von 10 g ammoniakexplodierter Cellulose mit einem Restammoniakgehalt von 7,7% wird mit 120 ml einer 1%-igen wäßrigen NaOH-Lösung 1 Stunde bei 20-25°C gemischt. Nach dem Absaugen der Natronlauge (restliche Natronlauge: 2,4%, bezogen auf Cellulose) wird die Cellulose mit 200 ml N-Methylpyrrolidon versetzt und 12 Stunden stehengelassen, um einen Austausch des NMP gegen Wasser zu ermöglichen. Der Zellstoff wird anschließend durch Abpressen vom Wasser enthaltenden NMP weitgehend befreit, sodann in reinem NMP aufgenommen. Nach Abkühlen auf 15°C wird, bezogen auf die Cellulose, 3,3 Masseprozent Benzyltrimethylammoniumchlorid zugesetzt. Anschließend wird so viel Benzoylchlorid, gelöst in NMP, zugegeben, daß das molare Verhältnis zum Zellstoff 1:1 beträgt. Die Reaktionsmischung wird 3 Stunden auf 50°C erhitzt, dann wieder abgekühlt und 12 Stunden stehengelassen. Die erhaltene Benzoylcellulose wird abfiltriert und mit Wasser und dann mit Alkohol gewaschen. Anschließend wird bei 80°C im Vakuum getrocknet.

### Beispiel 4: Herstellung von Cyanethylcellulose

NH₃-aktivierte Cellulose mit einem Ammoniakrestgehalt von 3% wird in einer wässrigen 0,5%-igen Natronlauge dispergiert. Diese Mischung wird 1 Stunde auf 5 °C gehalten, dann 15-30 Minuten gerührt. Eine Menge an Acrylnitril werden dann zugegeben, um ein molares Verhältnis von Acrylnitril/AHG von 2:1 einzustellen. Nach dem Rühren wird die Reaktionsmasse 1,5 bis 3 Stunden auf 45°C gehalten, dann etwa 2 Stunden bei 0 °C. Man neutralisiert mit Essigsäure. Die Cyanethylcellulose wird abfiltriert und mit Wasser, dann mit Alkohol gewaschen. Anschließend wird die Cyanethylcellulose bei 80°C im Vakuum getrocknet. Die erhaltene Cyanethylcellulose weist einen Substitutionsgrad von 0,28 auf.

### Beispiel 5 : Herstellung von Hydroxyethylcellulose

60 g Cellulose (Type Modo, DP(Cuoxan) ∼ 570) werden nach der Ammoniakexplosion in 750 ml 2%iger NaOH aufgenommen und im Rotationsverdampfer 30 min bei einer Temperatur von 25°C im Vakuum von 40 mbar entgast. Danach wird die gequollene Cellulose auf etwa 150g abgepreßt, mit 400 g tert-Butanol in einem 21-Rundkolben am Rotationsverdampfer vermischt und auf ca. 50mbar evakuiert. Anschließend werden 9g gasförmiges Ethylenoxid bei 25°C innerhalb von 30 min zudosiert, wobei der Druck 600mbar nicht überschreitet. Nach 1 h fällt der Druck auf etwa 220 mbar. Es wird mit Stickstoff ein Druckausgleich gegen Atmosphärendruck vorgenommen, danach auf 60°C erhitzt und 1h gerührt. Nach Abkühlung auf 20°C wird das Reaktionsgemisch mit Essigsäure neutralisiert. Das Reaktionsgemisch wird in 21 Aceton gegossen, abfiltriert und mit einer Lösung Acecon/Wasser (90%/10%) gewaschen. Nach Trocknung im Vakuumtrockenschrank bei 90°C/10mbar bis zur Massekonstanz werden 63g Hydroxyethylcellulose (DS∼0,4) erhalten. Das Produkt ist vollständig löslich in Wasser.

### Beispiel 6 : Herstellung von Hydroxyethylcellulose

20 g Cellulose (Type Modo, DP(Cuoxan) ∼ 570) werden nach der Ammoniakexplosion in 120 ml 2%iger NaOH aufgenommen und im Rotationsverdampfer 30min bei einer Temp. von 25°C im Vakuum von 40 mbar entgast. Danach wird die gequollene Cellulose auf etwa 60g abgepreßt mit 140 g tert-Butanol in einem 11-Rührautoklav intensiv vermischt und mit Stickstoff gespült. Anschließend werden 18g Ethylenoxid bei 25°C zugegeben, innerhalb von 30 min auf 60°C erhitzt und 1h gerührt. Nach Abkühlung des Autoklaven auf 20°C wird das Reaktionsgemisch mit Essigsäure neutralisiert. Das Reaktionsgemisch wird in 500 ml einer Lösung tert-Butanol/ Wasser (80%/20%) gegossen abfiltriert und mit tert-Butanol/Wasser (80%/20%) gewaschen. Nach Trocknung im Vakuumtrockenschrank bei 90°C/10mbar bis zur Massekonstanz werden 28g Hydroxyethylcellulose (DS∼2,6) erhalten. Das Produkt ist vollständig löslich in Wasser.

### Beispiel 7: Viskosierung

20 g Cellulose (Type Viscokraft LV 4, DP(Cuoxan) ∼ 400) werden nach der Ammoniakexplosion in 120 ml 4%iger NaOH aufgenommen und im Rotationsverdampfer in einem 11-Rundkolben 30min bei einer Temperatur von 25°C im Vakuum (40 mbar) entgast. Anschließend werden in den rotierenden Kolben 5g Schwefelkohlenstoff bei 25 - 30°C innerhalb von 5 min eindosiert, wobei der Druck auf etwa 500 mbar ansteigt. Nach 2 h fällt der Druck auf etwa 180 mbar. Danach wird der Kolben mit einem Eisbad gekühlt. Nach Abkühlung auf unter 10°C werden 80ml 8%ige NaOH zugesetzt und 12 h gerührt, bis eine hellgelbe klare viskose Lösung entseht.

## Patentansprüche

1. Verfahren zur Herstellung von Cellulosederivaten, bei dem
a) Cellulose mit einer Alkalilösung imprägniert wird,
b) die imprägnierte Cellulose wahlweise abgepreßt wird und
c) die Cellulose einer Substitutions- oder Additionsreaktion unterworfen wird,
wobei ein Cellulosederivat mit einem Substitutionsgrad DS erhalten wird,
**dadurch gekennzeichnet, daß** die eingesetzte Cellulose eine ammoniakaktivierte Cellulose ist, die durch ein Verfahren erhalten wird, bei dem Cellulose mit flüssigem Ammoniak bei einem gegenüber Atmosphärendruck erhöhten Ausgangsdruck und bei einer Temperatur von mindestens 25°C in Kontakt gebracht wird, wobei die Menge des flüssigen Ammoniaks zumindest zur Benetzung der Oberfläche der Cellulose ausreicht, und das dem System Cellulose/flüssiges Ammoniak zur Verfügung stehende Volumen unter Senken des Drucks um mindestens 5 bar explosionsartig vergrößert wird, und das molare Verhältnis von Alkali zu AHG in der Cellulose zu Beginn von Schritt c) das 2-fache vom DS nicht überschreitet.

2. Verfahren nach Anspruch 1, **dadurch gekennzeichnet, daß** die Alkalilösung eine Konzentration von 12 Gew.-% oder weniger aufweist.

3. Verfahren nach Anspruch 2, **dadurch gekennzeichnet, daß** die Alkalilösung eine Konzentration von weniger als 10 Gew.-% aufweist.

4. Verfahren nach einem der Ansprüche 1 bis 3, **dadurch gekennzeichnet, daß** das molare Verhältnis von Alkali zu AHG in der Cellulose zu Beginn von Schritt c) bezüglich des anzustrebenden Substitutionsgrades das 1,5-fache vom DS nicht überschreitet.

5. Verfahren nach einem der Ansprüche 1 bis 4, **dadurch gekennzeichnet, daß** ein substöchiometrisches Verhältnis von Alkali zu AHG in der Cellulose eingehalten wird.

6. Verfahren nach einem der vorstehenden Ansprüche, **dadurch gekennzeichnet, daß** die Alkalilösung wäßrige oder alkoholische Natronlauge oder Kalilauge ist.

7. Verfahren nach einem der vorstehenden Ansprüche, **dadurch gekennzeichnet, daß** die Substitutions- oder Additionsreaktion durch Umsetzung mit Schwefelkohlenstoff, acylgruppenübertragenden Reagenzien, alkylgruppenübertragenden Reagenzien, Alkenoxiden, α-Halogencarbonsäuren bzw. deren Salzen, α,β-ungesättigten Carbonylverbindungen oder Acrylnitril bewirkt wird.

8. Verfahren nach einem der vorstehenden Ansprüche, **dadurch gekennzeichnet, daß** die Cellulose nach der Imprägnierung mit Alkalilösung und vor der Substitutions- oder Additionsreaktion keinem Abpreßschritt unterzogen wird.

## Claims

1. Method of producing cellulose derivatives in which
(a) cellulose is impregnated with an alkaline solution,
(b) the impregnated cellulose is selectively squeezed out and
(c) the cellulose is subjected to a substitution or addition reaction, whereby a cellulose derivative is produced with a degree of substitution DS,
**characterised in that** the cellulose which is used is an ammonia-activated cellulose, which is produced by a method in which cellulose is brought into contact with liquid ammonia at a starting pressure, which is increased with respect to atmospheric pressure, and at a temperature of at least 25°C, the amount of the liquid ammonia being sufficient at least to wet the surface of the cellulose, and the volume available to the cellulose/liquid ammonia system is increased explosively whilst reducing the pressure by at least five bar and the molar relationship of alkali to AHG in the cellulose at the beginning of step (c) does not exceed twice the DS.

2. Method as claimed in claim 1, **characterised in that** the alkaline solution has a concentration of 12% by wt. or less.

3. Method as claimed in claim 2, **characterised in that** the alkaline solution has a concentration of less than 10% by wt.

4. Method as claimed in one of claims 1 to 3, **characterised in that** the molar ratio of alkali to AHG in the cellulose at the beginning of step (c), with respect to the desired degree of substitution, does not exceed 1.5 times the DS.

5. Method as claimed in one of claims 1 to 4, **characterised in that** a substoichiometric ratio of alkali to AHG is maintained in the cellulose.

6. Method as claimed in one of the preceding claims, **characterised in that** the alkaline solution is an aqueous or alcoholic caustic soda solution or potassium hydroxide solution.

7. Method as claimed in one of the preceding claims, **characterised in that** the substitution or addition reaction is effected by conversion with carbon disulphide, reagents carrying acyl groups, reagents carrying alkyl groups, alkene oxides, α-halogen carbonic acids or salts thereof, α,β-unsaturated carbonyl compounds or acrylonitrile.

8. Method as claimed in one of the preceding claims, **characterised in that** the cellulose is not subjected to a squeezing step after the impregnation with the alkaline solution and before the substitution of addition reaction.

## Revendications

1. Procédé pour la fabrication de dérivés de cellulose, au cours duquel
a) la cellulose est imprégnée d'une solution alcaline,
b) la cellulose imprégnée est comprimée au choix, et
c) la cellulose est soumise à une réaction de substitution ou d'addition qui permet d'obtenir un dérivé de cellulose présentant un degré de substitution DS,
**caractérisé en ce que** la cellulose utilisée est une cellulose activée par ammoniaque, qui est obtenue par un procédé qui consiste à mettre la cellulose en contact avec de l'ammoniaque liquide, sous une pression de sortie augmentée par rapport à la pression atmosphérique et à une température minimale de 25°C, auquel cas la quantité d'ammoniaque liquide suffit au moins à mouiller la surface de la cellulose et le volume mis à disposition du système cellulose/ammoniaque liquide est augmenté sous forme d'explosion, sous abaissement de la pression de 5 bars au moins, et le rapport molaire alcali/AHG dans la cellulose ne dépasse pas le double de DS, au début de l'étape c).

2. Procédé selon la revendication 1, **caractérisé en ce que** la solution alcaline présente une concentration de 12 % en poids ou moins.

3. Procédé selon la revendication 2, **caractérisé en ce que** la solution alcaline présente une concentration inférieure à 10 % en poids.

4. Procédé selon l'une quelconque des revendications 1 à 3, **caractérisé en ce que** le rapport molaire alcali/AHG dans la cellulose ne dépasse pas 1,5 fois la valeur de DS, en fonction du degré de substitution à atteindre, au début de l'étape c).

5. Procédé selon l'une quelconque des revendications 1 à 4, **caractérisé en ce qu'**un rapport sous-stoechiométrique alcali/AHG est respecté dans la cellulose.

6. Procédé selon l'une quelconque des revendications précédentes, **caractérisé en ce que** la solution alcaline est une lessive de soude ou une lessive de potassium aqueuse ou alcoolique.

7. Procédé selon l'une quelconque des revendications précédentes, **caractérisé en ce que** la réaction de substitution ou d'addition est provoquée par transformation avec du sulfure de carbone, des réactifs de transfert de groupes acyle, des réactifs de transfert de groupes alkyle, des oxydes d'alcène, des hydracides halogénés-α ou leurs sels, des composés carbonyles -α,β insaturés ou du nitrile acrylique.

8. Procédé selon l'une quelconque des revendications précédentes, **caractérisé en ce que**, après imprégnation avec une solution alcaline et avant la réaction de substitution ou d'addition, la cellulose n'est soumise à aucune étape de compression.
